# EUROPÄISCHE PATENTANMELDUNG

(11) **EP 0 890 798 A2**
(43) Veröffentlichungstag der Anmeldung: **13.01.1999**
(21) Anmeldenummer: 98250251.0
(22) Anmeldetag: 09.07.1998
(51) Int. Cl.: F24D 7/00

(54) **Mit einem Wärmeübertragungsmittel befüllte Wärmeverteilungsanlage**

(30) Priorität: 10.07.1997 DE 19731185
(71) Anmelder: Hecker, Monica, 17139 Malchin (DE)
(72) Erfinder: Hecker, Tomas, 17139 Malchin (DE)
(74) Vertreter: Effert, Bressel und Kollegen

(57) **Zusammenfassung**

Die Erfindung betrifft eine mit einem Wärmeübertragungsmittel befüllte Wärmeverteilungsanlage, insbesondere zur Beheizung von Innenräumen R oder zur Wärmeübertragung vom Erdreich an einen Wärmepumpenkreislauf mit einem Wärmetauscher, einem Sammelbehälter für das Wärmeübertragungsmittel und einem Rohrsystem zur Wärmeabgabe oder -aufnahme, wobei der Wärmetauscher an einen Wärmepumpenkreislauf angeschlossen ist und das Rohrsystem (3) vorlaufseitig und rücklaufseitig mit dem Sammelbehälter (2) verbunden sind.

## Beschreibung

Die Erfindung betrifft eine Wärmeverteilungsanlage mit mindestens einem Wärmetauscher, mindestens einem Sammelbehälter für ein in der Wärmeverteilungsanlage enthaltenes Wärmeübertragungsmittel und mindestens einem Rohrsystem zur Abgabe von Wärme an einen Wärmeverbraucher oder zur Aufnahme von Wärme von einem Wärmereservoir, wobei das Rohrsystem und der Wärmetauscher jeweils vorlaufseitig und rücklaufseitig mit dem Sammelbehälter verbunden sind, und der Wärmetauscher in einen Kreislauf eines Wärmeerzeugers und/oder in einen Kühlkreislauf eingebunden ist, sowie ein Verfahren zum Heizen oder zum Kühlen mit der vorgenannten Wärmeverteilungsanlage.

Zur Beheizung von Innenräumen in Gebäuden sind verschiedene Heizungsanlagen bekannt. So gibt es beispielsweise Schwerkraftheizungen, bei denen Wasser als Wärmetransportmittel eingesetzt wird. Das Wasser wird in diesem Falle in einem Wärmeerzeuger, beispielsweise einem Öl- oder Gasbrenner erhitzt. Das erhitzte Wasser gelangt in einen Kreislauf mit Heizkörpern, die sich innerhalb der Innenräume befinden. Das Wasser gibt die Wärme über die Heizkörper ab, so daß die Innenräume aufgeheizt werden. Das dadurch abgekühlte Wasser wird wieder zum Wärmeerzeuger zurückgeführt. Dieses System arbeitet, abgesehen vom hydrostatischen Druck innerhalb des Systems, im wesentlichen bei Atmosphärendruck.

Nachteilig bei dieser Anlage ist der mangelhafte Warmwasserumlauf. Häufig werden ungünstig gelegene Heizungsrohrstränge nur ungenügend von warmem Wasser durchströmt, so daß in diesen Bereichen eine ausreichende Heizleistung nicht gewährleistet ist. Zur Unterstützung der Kreislaufführung des Wassers werden daher bereits seit langem auch Umwälzpumpen eingesetzt. Dies ist jedoch nachteilig, da die Umwälzpumpen einen erheblichen elektrischen Energiebedarf aufweisen.

Derartige Heizungsanlagen können sowohl mit Heizkörpern als auch mit einer Fußbodenheizung betrieben werden. Im letzteren Falle werden Rohre mäanderförmig im Fußboden in den zu beheizenden Innenräumen verlegt. Die Vorlauftemperatur für eine Fußbodenheizung ist deutlich geringer als die Vorlauftemperatur bei Verwendung von Heizkörpern.

Übliche Wärmeerzeugerquellen werden durch Befeuerung und elektrische Beheizung betrieben. Eine weitere Möglichkeit besteht darin, Wärme mit einer Wärmepumpe zu erzeugen. Hierbei wird Wärme von einem kälteren Wärmereservoir zu den wärmeren Innenräumen transportiert. Dabei muß mechanische Arbeit aufgewendet werden. Derartige Anlagen sind ebenfalls seit langem bekannt.

Die bekannten Warmwasserheizungen weisen aber den Nachteil auf, daß die Vorlauf- und die Rücklauftemperatur des Wärmetransportmittels deutlich voneinander verschieden sind, da die Heizleistung ausschließlich über die erhöhte Temperatur des Heizmediums gespeist wird; in den Heizkörpern oder den Heizungsschlangen einer Fußbodenheizung kühlt sich das Heizmedium ab. Ein erheblicher Teil der entstehenden Kosten bei einer Warmwasserheizung wird durch den Betrieb der Umwälzpumpe aufgebraucht, da viel Energie durch den Transport des relativ viskosen Wassers im Rohrsystem verloren geht. Diese Energie wird in Form elektrischer Energie zugeführt und führt zu einer zusätzlichen Erwärmung des Wärmetransportmittels. Wegen der hohen Stromkosten entstehen hierbei erhöhte Betriebskosten.

Im Gegensatz hierzu weisen Wasserdampfheizungen den Vorteil auf, daß die an die Innenräume zu übertragende Wärme in der Kondensationsenergie des Wassers gespeichert ist. Bei diesem Heizungssystem wird in einem Wärmeerzeuger Wasserdampf durch Verdampfung von Wasser, das sich in einem Reservoir befindet, gebildet. Dieser Wasserdampf wird über ein geeignetes Rohrsystem durch Heizkörper geleitet. Dort kann der Dampf teilweise kondensieren und damit die Wärme abgeben. Das Kondensat wird wieder zum Wärmeerzeuger zurückgeführt. Diese Heizung kann mit Atmosphärendruck oder auch mit Unter- oder Überdruck betrieben werden. Dadurch kann die jeweilige Betriebstemperatur durch Wahl der geeigneten Siedetemperatur des Wassers in der Heizung eingestellt werden.

Eine derartige Dampfheizungsanlage ist in DE-OS 2027 496 beschrieben. Vorzugsweise soll der Wärmeträger in einem Druckbereich verwendet werden, der unter dem Atmosphärendruck liegt. In dem Dokument wird außerdem erwähnt, daß als Heizmittel beispielsweise auch ein Kältemittel unter einem gewissen Überdruck eingesetzt werden kann. Diese Anlage besteht aus einem Wärmeerzeuger, einem Dampfsammler, Heizkörpern und einem Kondensatsammelgefäß. Von dem Wärmeerzeuger gelangt der Wasserdampf in die Heizkörper, kühlt dort ab und kondensiert und gelangt danach über Einzelrohrstränge in das Kondensatsammelgefäß zurück. Als Wärmeerzeuger werden ein Wärmetauscher, ein Brenner oder eine elektrische Heizung vorgeschlagen.

Auch dieses Verfahren weist Nachteile auf. Insbesondere hat sich herausgestellt, daß die Beheizung mit Heizkörpern energetisch ungünstiger ist als eine Beheizung über Heizungsschlangen, die beispielsweise im Fußboden verlegt sind, da die Vorlauftemperatur des Heizmittels deutlich höher sein muß als die gewünschte Raumtemperatur. Ferner wurde durch Untersuchungen auch festgestellt, daß die in der Offenlegungsschrift beschriebene Anlage hinsichtlich der Rohrdurchmesser großzügig ausgelegt werden muß, um sicherzustellen, daß der Dampf bzw. das Wasser auch kontinuierlich im Kreislauf geführt wird. Die in der Offenlegungsschrift beschriebene Anlage weist keine zwangsgeführte Rückführung des Kondensats auf. Daher kann im Wärmeerzeuger befindliches Kondensat unter bestimmten Umständen durch die dort stattfindende Verdampfung in das vorgeschaltete Kondensatsammelgefäß zurückgedrückt werden, so daß die Wärmeerzeugung mangels flüssigen Heizmittels im Wärmeerzeuger unterbrochen wird und schlimmstenfalls sogar eine Überhitzung des Wärmeerzeugers stattfindet. Ein derartig instabiler Betriebszustand kann insbesondere dann auftreten, wenn die den Kreislauf bildenden Rohre einen geringen Querschnitt aufweisen, insbesondere die von den Heizkörpern zum Kondensatsammelgefäß zurückführenden Rohre, und wenn zudem eine geringe Bauhöhe der gesamten Anlage gewünscht wird, so daß der Höhenunterschied zwischen dem tiefstgelegenen Heizkörper und dem Kondensatsammelgefäß nur gering sein kann. In diesem Fall ist der durch die Schwerkraft hervorgerufene Überdruck im Kondensatsammelgefäß nicht mehr hoch genug, um zwangsweise Heizmittel in den Wärmeerzeuger zu überführen und damit sicherzustellen, daß immer genügend Kondensat im Wärmeerzeuger zur Verfügung steht.

Ferner ist aus Bild 1 in dem Fachartikel "Wärmespeicher zur Begrenzung der Schalthäufigkeit einer Wärmepumpe" von A. Meier in Sanitär- und Heizungstechnik, 1975, Seite 712 ein Schaltschema für eine Wärmepumpe bekannt, bei dem ein aus Verdampfer, Kompressor, Kondensator und Expansionventil bestehenden Wärmepumpenkreislauf, ein über den Kondensator parallel geschalteter Ladekreislauf mit einem Pufferspeicher und ein zu dem Ladekreis über den Pufferspeicher parallel geschalteter Verbraucherkreislauf dargestellt ist. In den Verbraucherkreislauf sind Umlaufpumpen geschaltet, die das im Verbraucherkreislauf enthaltene Wärmeübertragungsmittel zwangsweise führen.

Auch diese Anordnung mit mehreren parallel geschalteten Kreisläufen weist Nachteile auf, insbesondere die erforderliche Verwendung von Umlaufpumpen zur Herstellung eines Zwangsumlaufes des flüssigen Wärmeübertragungsmittels. Durch deren Verwendung wird der Wirkungsgrad einer derartigen Anlage verschlechtert, da die zum Betrieb der Pumpen aufgewendete teure elektrische Energie ausschließlich zur Beheizung des Wärmeübertragungsmittels dient.

Der vorliegenden Erfindung liegt von daher das Problem zugrunde, die Nachteile des Standes der Technik zu vermeiden und insbesondere eine mit einem Wärmeübertragungsmittel befüllte Wärmeverteilungsanlage bereitzustellen, mit der entweder Innenräume in Gebäuden beheizt werden können oder die für einen Wärmepumpenkreislauf erforderliche Energie über einen Kondensor übertragen werden kann. Vor allem soll diese Wärmeverteilungsanlage als Heizungsanlage zum Betrieb einer Fußbodenheizung geeignet sein, bei der die Vorlauftemperatur niedrig sein kann. Des weiteren sollen geringe Anforderungen an die Bauhöhe der Anlage bestehen sowie die Möglichkeit gegeben sein, auch Rohre für die Fußbodenheizung und die von dieser wegführenden Ableitungen mit geringem Querschnitt vorzusehen, ohne daß sich die vorstehend beschriebenen instabilen Verhältnisse beim Betrieb der Anlage einstellen.

Gelöst wird dieses Problem durch eine Wärmeverteilungsanlage nach Anspruch 1 sowie ein Verfahren zum Heizen und zum Kühlen mit der Wärmeverteilungsanlage nach Anspruch 8.

Die erfindungsgemäße Wärmeverteilungsanlage dient beispielsweise zur Beheizung von Innenräumen in Gebäuden oder zur Überführung von Wärmeenergie von einem Wärmereservoir zu einem Wärmepumpenkreislauf, beispielsweise zur Kühlung von Lebensmitteln in Kühlmöbeln (Kühlschränken, Gefriertruhen), Kühlräumen und -hallen sowie Fahrzeugen mit Kühleinrichtung, zur Kühlung von Wohngebäuden mit Klimaanlagen, zur Erzeugung von Prozeßkälte in der Industrie und ferner zur Verflüssigung von Gasen in Kühlaggregaten.

Die mit einem Wärmeübertragungsmittel befüllte Wärmeübertragungsanlage weist mindestens ein Rohrsystem zur Überführung von Wärme vom Wärmeverteilungssystem zu einem Wärmeverbraucher oder von einem Wärmereservoir zum Wärmeverteilungssystem, mindestens einen Wärmetauscher und mindestens einen Sammelbehälter für das Wärmeübertragungsmittel auf. Das Rohrsystem und der Wärmetauscher sind dabei jeweils vorlaufseitig und rücklaufseitig mit dem Sammelbehälter verbunden, und der Wärmetauscher ist in einen Kreislauf eines Wärmeerzeugers und/oder in einen Kühlkreislauf eingebunden.

Im Falle einer Heizanlage kann das Rohrsystem vorzugsweise als Fußbodenrohrsystem eingesetzt werden. Der Wärmetauscher ist zur Wärmeerzeugung oder Wärmeabführung vorzugsweise an einen Wärmepumpenkreislauf angeschlossen.

Die Heizungsanlage unterscheidet sich von bekannten Heizungsanlagen dadurch, daß die Elemente zum Beheizen des Wärmeverbrauchers und/oder die Elemente zur Wärmeaufnahme von dem Wärmereservoir (Rohrsystem) vorlaufseitig und rücklaufseitig mit dem Sammelbehälter verbunden sind und daß entweder
f1. dampfförmiges Wärmeübertragungsmittel aus einem im Sammelbehälter befindlichen Dampfraum austreten und in das Rohrsystem eintreten kann (für den Fall, daß Wärme vom Wärmeübertragungsmittel, das in einem zur Wärmeübertragung verwendeten Rohrsystem enthalten ist, an einen Wärmeverbraucher abgegeben wird), oder
f2. dampfförmiges Wärmeübertragungsmittel aus dem Rohrsystem austreten und in einen im Sammelbehälter befindlichen Dampfraum eintreten kann (für den Fall, daß Wärme durch das im Rohrsystem enthaltene Wärmeübertragungsmittel von einem Wärmereservoir aufgenommen wird).

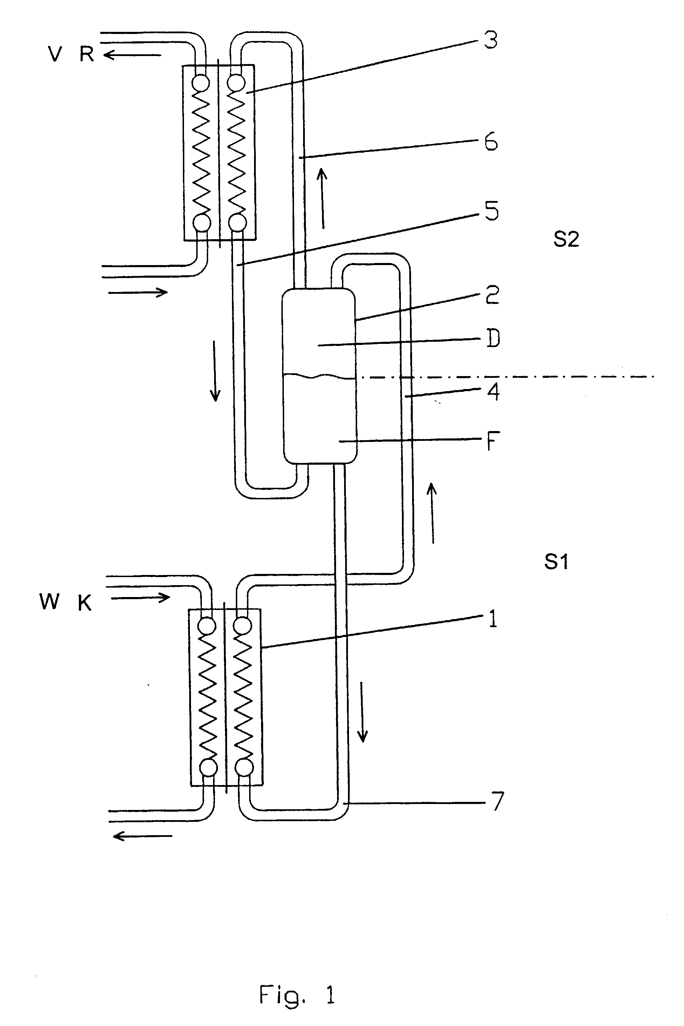

Durch die erfindungsgemäße Lösung ergibt sich ein Sekundärkreislauf, der wiederum zwei Teilkreisläufe S1 und S2 umfaßt, in denen sich das Wärmeübertragungsmittel befindet. In
- Figur 1: ist eine derartige Anordnung schematisch dargestellt.

Der erste Kreislauf S1 umfaßt im Falle der Verwendung der Anlage zum Heizen einen Wärmetauscher 1 zur Überführung von Wärme von einem Wärmeerzeuger oder Wärmereservoir W zu diesem Sekundärkreislauf S1 sowie den Sammelbehälter 2 mit einem Dampfraum D und einem Flüssigkeitssumpf F für das Wärmeübertragungsmittel. Der zweite Kreislauf umfaßt wiederum den Sammelbehälter 2 und ferner einen zweiten Wärmeaustauscher 3 zur Überführung der aufgenommenen Wärme vom Sekundärkreislauf S2 zu einem Wärmeverbraucher V.

Bei Verwendung der Anlage zum Kühlen dient der Wärmetauscher 1 zur Abführung von Wärme von dem zu kühlenden Medium K an den Sekundärkreislauf S1, der wiederum auch das Sammelgefäß einschließt. Der zweite Sekundärkreislauf S2 dient zur Abführung der von dem zu kühlenden Medium K aufgenommenen Wärme über den Wärmeaustauscher 3 zu einem Wärmereservoir R.

In dieser Anordnung zirkuliert das Wärmeübertragungsmittel ausschließlich schwerkraftunterstützt. Das energiereiche erwärmte Wärmeübertragungsmittel, das vom Wärmereservoir W oder dem zu kühlenden Medium K kommt, erwärmt im Wärmetauscher 1 das Wärmeübertragungsmittel im inneren Teilkreislauf S1, das dabei verdampft. Das entstehende gasförmige Wärmeübertragungsmittel wird in den Dampfraum D des Sammelgefäßes 2 überführt. Von dort gelangt das gasförmige Mittel in den Teilkreislauf S2 und damit in den Wärmetauscher 3. In diesem erwärmt das gasförmige Mittel das im äußeren Kreislauf befindliche energiearme Wärmeübertragungsmittel V zur Beheizung des Wärmeverbrauchers oder zur Wärmeabfuhr zum Wärmereservoir R. Dabei kühlt sich das gasförmige Wärmeübertragungsmittel ab und kondensiert wieder. Die Flüssigkeit wird schwerkraftgetrieben in den Flüssigkeitssumpf F des Sammelgefäßes zurückgeführt und gelangt von dort in den Teilkreislauf S1, wo es im Wärmeaustauscher 1 wieder Wärme aufnehmen und dabei verdampft werden kann.

Anstelle von Primärkreisläufen an den Wärmetauschern 1 und 3 können auch direkt Wärmeverbraucher bzw. Wärmeerzeuger (-reservoirs) angeschlossen sein.

Der gesamte Prozeß ist schwerkraftgetrieben, d.h. es ist kein Zwangsumlauf, beispielsweise mit energieverzehrenden Umlaufpumpen, erforderlich. Durch die gemeinsame Einführung der das gasförmige Mittel enthaltenden Leitungen in den Dampfraum D und der das flüssige Mittel enthaltenden Leitungen in den Flüssigkeitssumpf F des Sammelgefäßes wird eine sichere Betriebsweise gewährleistet, da die Flüssigkeit sich nicht gegen das gasförmige Mittel aufstauen und damit im ungünstigsten Falle in umgekehrter Richtung gedrückt werden kann. Damit ist es auch möglich, kleinere Querschnitte der Leitungen zu wählen, da bei herkömmlicher Bauart eine Querschnittsverringerung aus den vorgenannten Gründen gerade nicht möglich ist. Außerdem findet der Flüssigkeitsumlauf auch bereits bei geringen statischen Drücken in der Anlage statt, d.h. bei geringer Bauhöhe.

Die beschriebene Anlage ist beispielsweise zur Beheizung von Innenräumen in gebäuden und zur Übertragung von Wärme von einem Wärmereservoir, beispielsweise dem Erdreich oder dem Grundwasser, in den Kreislauf geeignet.

Die nachfolgende detaillierte Beschreibung betrifft zunächst den erfindungsgemäßen Anwendungsfall einer Heizungsanlage, bei der Wärme über den Wärmetauscher in den Sekundärkreislauf überführt wird.

Im Falle einer als Heizungsanlage betriebenen Wärmeverteilungsanlage wird durch Einleitung des dampfförmigen Wärmeübertragungsmittels vom Wärmetauscher 1 zuerst in den Sammelbehälter sicher vermieden, daß der im Wärmetauscher entstehende Dampf nicht nur wie gewünscht in das Rohrsystem zu den Heizelementen hin entweicht, sondern auch zum Sammelgefäß hin, bevor es in einem Anwendungsfall in Heizelemente 3 eintreten kann, die ein Rohrsystem zum Heizen, beispielsweise eine Fußbodenheizung, bilden.

Mit der erfindungsgemäßen Anlage ist auch sichergestellt, daß der Wärmetauscher immer ausreichend mit aus den Heizelementen zurückfließendem Kondensat befüllt ist und somit die Heizleistung der Anlage kontinuierlich sichergestellt werden kann. Selbst wenn die Querschnitte der Heizelemente im Falle einer Fußbodenheizung sowie des Rohrsystems zur Rückführung des Wärmeübertragungsmittels von den Heizelementen zum Sammelbehälter und zudem die Höhendifferenz zwischen den am niedrigsten angeordneten Heizelementen und dem Sammelgefäß relativ gering sein sollten, besteht mit dieser Konfiguration nicht die Gefahr eines instabilen Betriebszustandes. Durch Überführung des verdampften Wärmeübertragungsmittels zuerst in den Sammelbehälter und erst danach in die Heizelemente wird gewährleistet, daß der im Wärmetauscher entstehende Dampf ausschließlich zu den Heizelementen geleitet wird.

Ein weiterer Vorteil besteht darin, daß die Heizleistung in einzelnen Innenräumen in Gebäuden automatisch nach dem jeweiligen Heizbedarf geregelt wird, da eine niedrigere Temperatur in einem Innenraum zwangsläufig zur Kondensation des in das Rohrsystem eingeleiteten Dampfes führt und damit dort mehr Energie abgegeben wird als in einem Raum mit einer höheren Temperatur.

Die vorstehend angegebenen Vorteile gelten auch entsprechend für den anderen erfindungsgemäßen Anwendungsfall, bei dem Wärme von dem Wärmereservoir über die Sekundärkreisläufe in einen Wärmepumpenkreislauf übertragen wird. Der Wärmepumpenkreislauf kann je nach Anwendungsfall am Wärmetauscher 1 oder am Wärmetauscher 3 angeschlossen werden. Im ersten Fall stellt der Wärmetauscher 1 gleichzeitig den Verflüssiger im Wärmepumpenkreislauf dar, im zweiten Fall der Wärmetauscher 3 den Verdampfer.

Der Wärmetauscher 1 ist zur Wärmeerzeugung vorzugsweise an einen Wärmepumpenkreislauf angeschlossen. Durch die gewählte Anordnung anstelle einer Schaltung, bei der der primäre Wärmepumpenkreislauf in den Heizungskreislauf direkt eingebunden ist und keine zusätzliche Trennung über einen Wärmetauscher besteht, müssen keine besonderen Maßnahmen zur Vermeidung eines Austrittes von Öl enthaltenden Kältemitteln aus dem Rohrsystem ergriffen werden. Derartige Maßnahmen würden beispielsweise die doppelwandige Ausführung der Rohre des Rohrsystems einschließen, die außerordentlich kostspielig ist. Überdies weisen diese doppelwandigen Rohre den weiteren Nachteil auf, daß sie nur schwierig verlegt werden können.

Der Wärmetauscher ist mit dem Sammelbehälter verbunden und zwar im Falle einer Heizungsanlage derart, daß aus dem Wärmetauscher austretendes dampfförmiges Wärmeübertragungsmittel in einen im Sammelbehälter befindlichen Dampfraum D eintreten kann. Der gebildete Dampf muß nicht erst durch das ebenfalls im Sammelbehälter enthaltene Kondensat im Flüssigkeitssumpf F hindurchtreten, das dem Dampf einen Strömungswiderstand entgegensetzen würde. Die Gefahr des Zurückweichens des Kondensats in den Sammelbehälter wird dadurch noch weiter erniedrigt.

In einer bevorzugten Ausführungsform wird der Sammelbehälter oberhalb des Wärmetauschers angeordnet. Der der Höhendifferenz zwischen dem Flüssigkeitsspiegel im Sammelbehälter und ungefähr der halben Bauhöhe des Wärmetauschers entsprechende statische Druck des flüssigen Wärmeübertragungsmittels soll hierbei den Druckverlust im Wärmetauscher, der durch die dortige Flüssigkeitsströmung entsteht, gerade ausgleichen und vorzugsweise einen so großen Überdruck aufbauen, daß ein Flüssigkeitsumlauf im Sekundärkreislauf S1 stattfindet. Falls also die Durchströmungsgeschwindigkeit durch den Wärmetauscher groß und/oder ein Wärmeübertragungsmittel mit im flüssigem Zustand hoher Viskosität ausgewählt wird, muß der Höhenunterschied beim Einbau groß sein. Im umgekehrten Falle gilt das Entsprechende.

In gleicher Weise sollte der Sammelbehälter unterhalb der Heizelemente (Wärmetauscher 3 in Figur 1) angeordnet sein. Der der Höhendifferenz zwischen dem Flüssigkeitsspiegel des Wärmeübertragungsmittels in den Heizelementen und dem Flüssigkeitsspiegel im Sammelbehälter entsprechende statische Druck des flüssigen Wärmeübertragungsmittels soll in diesem Falle den Druckverlust in den Heizelementen gerade ausgleichen und vorzugsweise einen so großen Überdruck aufbauen, daß ein Flüssigkeitsumlauf im Sekundärkreislauf S2 stattfindet.

Der im Wärmetauscher 1 gebildete und in den Sammelbehälter eingeleitete Dampf wird über eine weitere in den Dampfraum D im Sammelbehälter 2 hineinragende Leitung in die Heizelemente gefördert. Zur Förderung dient ausschließlich der statische Druck des aus den Heizelementen ausfließenden Kondensats. In den Heizelementen kondensiert das Wärmeübertragungsmittel und fließt von dort wieder in den Flüssigkeitssumpf F im Sammelgefäß 2 zurück. Die Vorlauf- und die Rücklauftemperatur des Mittels sind im günstigsten Falle gleich, differieren maximal jedoch nur um wenige Grad. Dies bedeutet, daß fast ausschließlich die Kondensationswärme des Wärmeübertragungsmittels zur Beheizung genutzt wird. Dies hat den Vorteil, daß kein überhitzter Dampf sondern ausschließlich nasser Dampf eingesetzt wird, so daß der Wärmeübergang in den Heizelementen optimal ist. Nach dem Durchtritt durch den Sammelbehälter wird das Kondensat wieder in den Wärmetauscher 1 zurückgeleitet.

Daher ergeben sich für die erfindungsgemäße Anordnung folgende Vorteile gegenüber herkömmlichen Anordnungen:
i. Ein Zwangsumlauf von flüssigem Wärmeübertragungsmittel ist nicht erforderlich, so daß beispielsweise elektrische Energie zum Betrieb einer Verbraucherpumpe nicht zusätzlich eingesetzt zu werden braucht.
ii. Zwischen Vorlauf und Rücklauf des Verbrauchers kann eine sehr kleine Temperaturdifferenz realisiert werden, indem der Wärmetransport im wesentlichen ausschließlich über die Kondensations- bzw. Verdampfungswärme des Übertragungsmittels stattfindet; damit kann die Arbeitszahl der Wärmepumpe und damit deren Wirkungsgrad größer werden.
iii. Bei der Fahrweise in der vorgenannten Art besteht die Möglichkeit, einen geringen Rohrquerschnitt einzusetzen, so daß der bei Wahl der Wärmeübertragung durch Kondensations- bzw. Verdampfungswärme ohnehin bereits sehr günstige Wärmeübergang zum Verbraucher noch wirksamer wird und die Installationskosten für das Rohrsystem sehr viel geringer werden; beispielsweise bedarf es keines speziellen Estrichs zur Verlegung des Rohrsystems in Fußböden.
iv. Trotz Wahl eines geringen Rohrquerschnitts ist eine geringe Bauhöhe der Heizung möglich, da durch spezielle Führung der Rücklaufleitungen des Rohrsystems in den Dampfraum des Sammelgefäßes bereits ein geringer hydrostatischer Überdruck ausreicht, um ein einwandfreies Funktionieren der Anlage sicherzustellen; bei der gewählten erfindungsgemäßen Anordnung ist nicht zu befürchten, daß flüssiges Wärmeübertragungsmittel aus dem Sammelgefäß in das Rohrsystem oder gar gasförmiges in den Wärmeaustauscher gelangen; letzteres wäre für die Wärmepumpe sehr schädlich, da der Wärmeübergang des gasförmigen Mittels zu gering ist, um einen schadensfreien Betrieb der Wärmepumpe zu gewährleisten.

Bevorzugte Ausführungsformen der Erfindung sind in den Unteransprüchen angegeben.

In einer bevorzugten Ausführungsform der Erfindung sind zwischen dem Rohrsystem und dem Sammelbehälter Fallrohre vorgesehen und derart angeordnet, daß Kondensat mittels der Schwerkraft im Falle der Überführung von Wärme vom Wärmeerzeuger zum Rohrsystem (Heizungsanlage), aus dem Rohrsystem in den Sammelbehälter oder im Falle der Überführung von Wärme vom Rohrsystem zum Kälteerzeuger (beispielsweise Erdwärmetauscher) vom Sammelbehälter in das Rohrsystem einfließen kann. In den Fallrohren können absperrende Magnetventile zur Raumtemperatureinstellung vorgesehen sein. Zur Temperatureinstellung für die Innenräume ist mindestens eine geeignete Temperaturmeß- und -regeleinrichtung vorgesehen, deren Ausgangssignale zur Steuerung der Magnetventile dienen.

Für eine Heizungsanlage dient der Wärmetauscher 3 als Rohrsystem für eine Fußbodenheizung. Diese Heizelemente können in Form von Heizungsschlangen in einer Fußbodenfüllung, für eine Wandheizung in Wänden und/oder für eine Deckenheizung in Decken der Innenräume verlegt sein. Mehrere (zwei oder mehr) Rohre des Rohrsystems werden beispielsweise rücklaufseitig an eine Sammelleitung angeschlossen, wobei die Sammelleitung über ein Fallrohr mit dem Sammelbehälter verbunden ist.

Vorzugsweise werden für die Heizelemente Rohre mit einem Außendurchmesser von 4 bis 10 mm verwendet. Dadurch wird der Verlegeaufwand minimiert und der Wärmeübergang optimiert. Der einfachere Verlegeaufwand ergibt sich daraus, daß die Rohre beispielsweise auch ohne zusätzlichen Estrich einfach auf einem Holzfußboden befestigt werden können und die entstehenden Unebenheiten mit Ausgleichsmasse ausgeglichen werden kann. Darüber kann bereits ein Teppichboden oder Parkett verlegt werden. Ein besserer Wärmeübergang ergibt sich daraus, daß die Rohrinnenoberfläche, bezogen auf das Innenvolumen der Rohre, und damit der Wärmeübergang umso größer sind je geringer der Durchmesser des Rohres ist, so daß eine Vielzahl von Rohren mit geringem Querschnitt günstiger sind als wenige Rohre mit größerem Querschnitt. Vorzugsweise werden Kupferrohre für einen optimalen Wärmeübergang verwendet.

Als Wärmeübertragungsmittel wird vorzugsweise ein Kältemittel eingesetzt, das für den Einsatz in Kältemaschinen üblich ist. Derartige Kältemittel weisen beispielsweise einen Siedepunkt von 15 bis 35°C bei einem Druck von 2 bis 15 Bar auf. Damit wird der Betriebsbereich einer Heizungsanlage innerhalb der gewünschten Innentemperatur gewählt, so daß eine Aufheizung über den Siedepunkt hinaus nicht erforderlich ist. Daraus ergibt sich ein optimaler Wärmeübergang vom Kältemittel an die Heizelemente und damit an den Innenraum. Der weniger wirkungsvolle Wärmeübergang von überhitztem Dampf an die Heizelementwände zur Ausnutzung der Erwärmung durch Temperaturerniedrigung des Dampfes wird vermieden.

Die beschriebene Anlage kann außerhalb eines Gebäudes, beispielsweise in einem Schacht, untergebracht werden.

Die vorstehenden Ausführungen zu einer Heizungsanlage gelten für eine Kühlanlage, beispielsweise mit einem Erdwärmetauscher, in entsprechender Weise. In diesem Falle wird Wärme von dem Rohrsystem zum Wärmetauscher transportiert und dort an einen Wärmepumpenkreislauf übergeben. Hierbei verdampft das Wärmeübertragungsmittel im Rohrleitungssystem und wird als Dampf über das Sammelgefäß an den Wärmetauscher weitergeleitet. Dort kondensiert das Wärmeübertragungsmittel wieder. Das Kondensat wird dann über das Sammelgefäß zum Rohrleitungssystem zurückbefördert.

Anhand der nachfolgend dargestellten Figuren soll die Erfindung näher beschrieben werden. Es zeigen:
- Figur 2:: Schematische Darstellung der Heizungsanlage mit angeschlossener Wärmepumpe zur Wärmeerzeugung;
- Figur 3:: Schematische Darstellung zur Verlegung von Heizelemente in einer Wandfüllung in Innenräumen;
- Figur 4:: Schematische Darstellung eines Erdwärmetauschers.

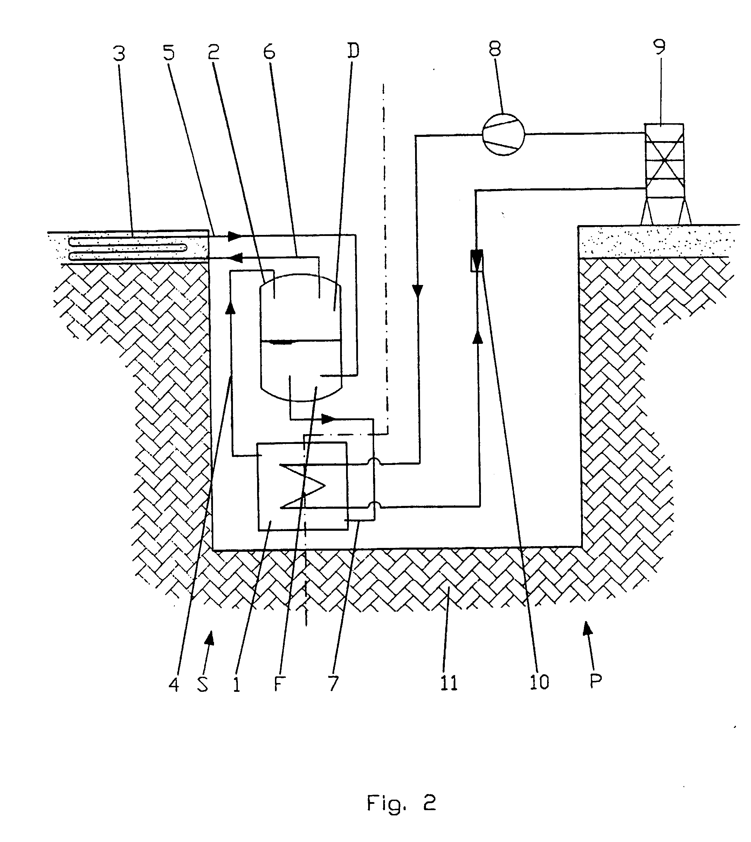

In Figur 2 ist eine Heizungsanlage mit einem Wärmetauscher 1 (entspricht Wärmetauscher 1 in Figur 1) dargestellt, der zum einen in den zur Heizung benötigten Sekundärkreislauf S, bestehend aus den Teilkreisläufen S1 und S2, und zum anderen in den Kreislauf einer Wärmepumpe P integriert ist.

Der Wärmetauscher 1 ist sekundärseitig über die Leitung 4 mit dem Sammelbehälter 2 verbunden. Die Leitung 4 führt in den Dampfraum im Sammelbehälter 2 hinein. Vom Dampfraum des Sammelbehälters 2 zweigt eine weitere Leitung 6 ab, die zu den Heizelementen 3 (entspricht Wärmetauscher 3 in Figur 1) führt, hier die Rohre einer Fußbodenheizung. In diesen Rohren kondensiert das dampfförmige Kältemittel. Die Heizelemente 3 sind rücklaufseitig über die Leitung 5 mit dem Flüssigkeitssumpf F des Sammelbehälters 2 verbunden. Im Betrieb befindet sich in diesem Sumpf das Kondensat. Dieses kann über eine weitere in den Sumpf des Sammelbehälters 2 hineinragende Leitung 7 in den Wärmetauscher 1 zurückgeleitet und dort wieder verdampft werden.

Der Sammelbehälter 2 und der Wärmeausstauscher 1 sind in einem Schacht 11 im Boden versenkt angeordnet.

Primärseitig ist der Wärmetauscher mit einem Wärmepumpenkreislauf P verbunden. Das aus dem Wärmetauscher austretende und kondensierte Kältemittel im Primärkreislauf P gelangt zuerst in ein Expansionsventil 10, in dem es auf eine niedrige Temperatur abgekühlt wird. Danach wird das Kältemittel in den Verdampfer 9 geleitet, beispielsweise in einen durch die Umgebungsluft betriebenen Wärmetauscher, in dem das Kältemittel verdampft wird. Anschließend wird das Kältemittel über den Verdichter 8 geführt. Dort wird es verdichtet und gelangt danach wieder in den Wärmetauscher 1.

Als Wärmeübertragungsmittel im Sekundärkreislauf S kann insbesondere das handelsübliche Kältemittel R134A verwendet werden. Vorzugsweise wird kein brennbares Propan verwendet. Daher können Undichtigkeiten in einem Rohrsystem in Innenräumen keine Sicherheitsrisiken hervorrufen.

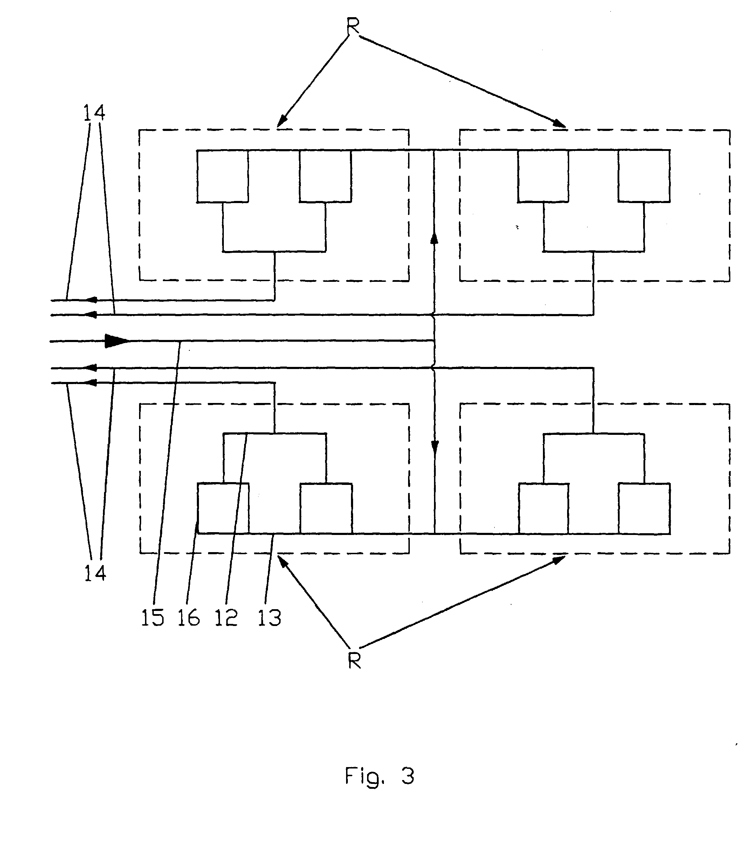

In Figur 3 ist der Verlegeplan für eine Fußbodenheizung in vier Innenräumen R dargestellt. Der Dampf des Kältemittels gelangt vom Sammelbehälter über die Leitung 15 in die einzelnen Innenräume R in einem Gebäude. Die Leitung 15 weist einen Außendurchmesser von 28 mm auf. Die Leitung 15 geht in weitere Leitungen 13 über, die einen Außendurchmesser von 15 mm aufweisen. Die Leitungen 13 gehen in die in der Fußbodenfüllung mäanderförmig (hier nicht dargestellt) verlegten Heizschlangen 16 über. Die Heizungsschlangen 16 haben einen Außendurchmesser von 6 mm. In den Heizungsschlangen 16 kondensiert das Kältemittel und gibt damit Wärme an den Innenraum R ab. Die Heizungsschlangen 16 sind an Sammelleitungen 12 angeschlossen. Diese weisen ebenfalls einen Außendurchmesser von 6 mm auf. Die Sammelleitungen 12 gehen in die Fallrohre 14 über (Außendurchmesser 6 mm). Von dort wird das Kondensat zum Sammelbehälter zurückgeführt. Alle Leitungen sind als Kupferrohre ausgeführt.

Für jeden Innenraum R ist ein Fallrohr 14 vorgesehen. In die Fallrohre 14 können ferner Magnetventile integriert sein, mit denen der Durchfluß des Kondensats geregelt werden kann. Die Magnetventile werden über geeignete Temperaturmeß- und -regeleinrichtungen, die in jedem Innenraum R vorgesehen sein können, gesteuert.

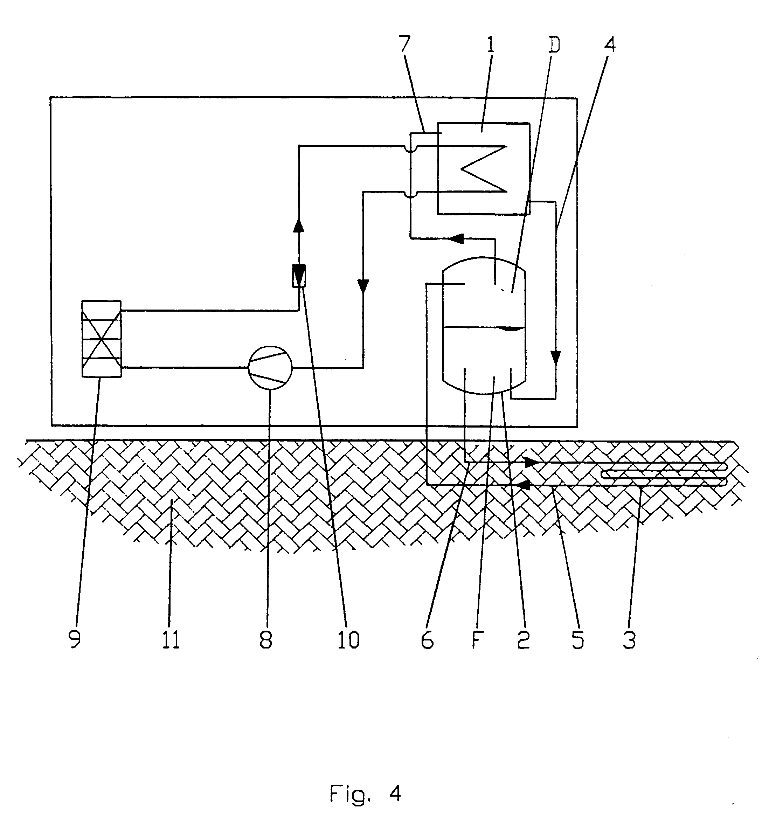

In Figur 4 ist ein Wärmeverteilungssystem zur Übertragung von Wärme vom Erdreich zu einem Wärmepumpenkreislauf dargestellt. Die im Erdreich 11 gespeicherte Wärme wird über ein Rohrsystem 3 (entspricht Wärmetauscher 1 in Figur 1) auf das in dem Rohrsystem 3 enthaltene Kältemittel, beispielsweise Propan, übertragen. Dabei verdampft das Kältemittel. Der Dampf wird über die Leitung 5 in den Dampfraum eines Sammelbehälters 2 geleitet. Von dort gelangt der Dampf über die Leitung 7 in den Wärmetauscher 1 (entspricht Wärmetauscher 3 in Figur 1). Im Wärmetauscher 1 gibt der Dampf die Kondensationsenergie an das im Wärmepumpenkreislauf befindliche Kältemittel ab und kondensiert hierbei. Das entstandene Kondensat wird über eine Leitung 4 in den Sammelbehälter 2 zurückgeführt. Von dort gelangt das Kondensat wieder über die Leitung 6 in das im Erdreich verlegte Rohrsystem 3.

Der Wärmepumpenkreislauf ist in üblicher Weise aus einem Wärmetauscher 9, der Verdichterpumpe 8 und einem Expansionsventil 10 gebildet.

Alle offenbarten Merkmale sowie Kombinationen der offenbarten Merkmale sind Gegenstand dieser Erfindung, soweit diese nicht ausdrücklich als bekannt bezeichnet werden.

### Bezugszeichenliste:

- 1: Wärmetauscher
- 2: Sammelgefäß
- 3: Wärmetauscher/Rohrsystem
- 4: Verbindungsleitung vom Wärmetauscher 1 zum Sammelgefäß 2
- 5: Verbindungsleitung vom Wärmetauscher/Rohrsystem 3 zum Sammelgefäß 2
- 6: Verbindungsleitung vom Sammelgefäß zum Wärmetauscher/Rohrsystem 3
- 7: Verbindungsleitung vom Sammelgefäß zum Wärmetauscher 1
- 8: Verdichter
- 9: Verdampfer
- 10: Expansionsventil
- 11: Erdreich/Schacht
- 12: Sammelleitungen für Heizungsschlangen in der Fußbodenheizung
- 13: Zuführleitungen für Fußbodenheizung in den einzelnen Räumen R
- 14: Fallrohre
- 15: Hauptleitung zur Zuführung des Wärmeübertragungsmittels zur Fußbodenheizung
- 16: Heizungsschlangen in der Fußbodenheizung
- R: Innenräume in Gebäuden
- P: Primärkreislauf
- S: Sekundärkreislauf mit Teilkreisläufen S1 und S2
- F: Flüssigkeitsraum im Sammler 2
- D: Dampfraum im Sammler 2
- V: Zu heizender Wärmeverbraucher
- W: Wärmereservoir als Wärmequelle zum Betrieb der Anlage zum Heizen
- K: Zu kühlendes Medium
- R: Wärmereservoir als Wärmesenke beim Betrieb der Anlage zum Kühlen

## Patentansprüche

1. Wärmeverteilungsanlage mit
a. mindestens einem Wärmetauscher,
b. mindestens einem Sammelbehälter für ein in der Wärmeverteilungsanlage enthaltenes Wärmeübertragungsmittel und
c. mindestens einem Rohrsystem zur Abgabe von Wärme an einen Wärmeverbraucher oder zur Aufnahme von Wärme von einem Wärmereservoir, wobei
d. das Rohrsystem und der Wärmetauscher jeweils vorlaufseitig und rücklaufseitig mit dem Sammelbehälter verbunden sind, und
e. der Wärmetauscher in einen Kreislauf eines Wärmeerzeugers und/oder in einen Kühlkreislauf eingebunden ist,
dadurch gekennzeichnet, daß das Rohrsystem (3) mit dem Sammelbehälter (2) derart verbunden ist, daß
f1. entweder im Falle der Abgabe von Wärme von im Rohrsystem (3) enthaltenem Wärmeübertragungsmittel an einen Wärmeverbraucher (V,R) dampfförmiges Wärmeübertragungsmittel aus einem im Sammelbehälter (2) befindlichen Dampfraum (D) austreten und in das Rohrsystem eintreten
f2. oder im Falle der Aufnahme von Wärme durch das im Rohrsystem (3) enthaltene Wärmeübertragungsmittel von einem Wärmereservoir (W,K) dampfförmiges Wärmeübertragungsmittel aus dem Rohrsystem austreten und in einen im Sammelbehälter (2) befindlichen Dampfraum (D) eintreten kann.

2. Wärmeverteilungsanlage nach Anspruch 1, dadurch gekennzeichnet, daß der Wärmetauscher (1) mit dem Sammelbehälter (2) derart verbunden ist, daß aus dem Wärmetauscher (1) austretendes dampfförmiges Wärmeübertragungsmittel in einen im Sammelbehälter (2) befindlichen Dampfraum (D) eintreten kann.

3. Wärmeverteilungsanlage nach einem der vorstehenden Ansprüche, dadurch gekennzeichnet, daß zwischen dem Rohrsystem (3) und dem Sammelbehälter (2) Fallrohre (14) vorgesehen und derart angeordnet sind, daß
g1. entweder im Falle der Abgabe von Wärme von im Rohrsystem (3) enthaltenem Wärmeübertragungsmittel an einen Wärmeverbraucher (V,R) kondensiertes Wärmeübertragungsmittel durch die Schwerkraft aus dem Rohrsystem (3) in den Sammelbehälter (2) einfließen kann
g2. oder im Falle der Aufnahme von Wärme durch das im Rohrsystem (3) enthaltene Wärmeübertragungsmittel von einem Wärmereservoir (W,K) kondensiertes Wärmeübertragungsmittel durch die Schwerkraft vom Sammelbehälter (2) in das Rohrsystem (3) einfließen kann.

4. Wärmeverteilungsanlage nach einem der vorstehenden Ansprüche, dadurch gekennzeichnet, daß an den Fallrohren (14) absperrende Magnetventile zur Temperatureinstellung vorgesehen sind.

5. Wärmeverteilungsanlage nach Anspruch 4, dadurch gekennzeichnet, daß zur Temperatureinstellung mindestens eine geeignete Temperaturmeß- und -regeleinrichtung vorgesehen ist, deren Ausgangssignale zur Steuerung der Magnetventile dienen.

6. Wärmeverteilungsanlage nach einem der vorstehenden Ansprüche, dadurch gekennzeichnet, daß das Rohrsystem (3) als Fußbodenheizung dient und in Form von Heizungsschlangen in einer Fußbodenfüllung, in Wänden und/oder in Decken von Innenräumen (R) verlegt ist.

7. Wärmeverteilungsanlage nach Anspruch 6, dadurch gekennzeichnet, daß mehrere Rohre des Rohrsystems (3) rücklaufseitig an eine Sammelleitung (12) angeschlossen sind und die Sammelleitung (12) über ein Fallrohr (14) mit dem Sammelbehälter (3) verbunden ist.

8. Verfahren zum Heizen oder zum Kühlen mit einer Wärmeverteilungsanlage, die
a. mindestens einen Wärmetauscher,
b. mindestens einen Sammelbehälter für ein in der Wärmeverteilungsanlage enthaltenes Wärmeübertragungsmittel und
c. mindestens ein Rohrsystem zur Abgabe von Wärme an einen Wärmeverbraucher oder zur Aufnahme von Wärme von einem Wärmereservoir aufweist, wobei
d. das Rohrsystem und der Wärmetauscher jeweils vorlaufseitig und rücklaufseitig mit dem Sammelbehälter verbunden sind, und
e. der Wärmetauscher in einen Kreislauf eines Wärmeerzeugers und/oder in einen Kühlkreislauf eingebunden ist,
dadurch gekennzeichnet, daß
f1. entweder im Falle der Abgabe von Wärme von im Rohrsystem (3) enthaltenem Wärmeübertragungsmittel an einen Wärmeverbraucher (V,R) dampfförmiges Wärmeübertragungsmittel aus einem im Sammelbehälter (2) befindlichen Dampfraum (D) abgezogen und in das Rohrsystem überführt
f2. oder im Falle der Aufnahme von Wärme durch das im Rohrsystem (3) enthaltene Wärmeübertragungsmittel von einem Wärmereservoir (W,K) dampfförmiges Wärmeübertragungsmittel aus dem Rohrsystem abgezogen und in einen im Sammelbehälter (2) befindlichen Dampfraum (D) überführt wird.

9. Verfahren nach einem der vorstehenden Ansprüche, dadurch gekennzeichnet, daß als Wärmeübertragungsmittel ein Kältemittel mit einem Siedepunkt von 15 bis 35°C bei einem Druck von 2 bis 15 Bar verwendet wird.
